# EUROPEAN PATENT SPECIFICATION

(11) **EP 3 086 109 B1**
(45) Date of publication and mention of the grant of the patent: **07.11.2018**
(21) Application number: 16166701.9
(22) Date of filing: 22.04.2016
(51) Int. Cl.: G01N 21/47, G01N 21/85, F16N 7/32, G02B 19/00, G02B 27/00, F01M 11/10, F01M 13/00, G01N 15/06, G01N 21/53

(54) **OIL MIST DETECTING DEVICE AND OIL MIST DETECTING METHOD**
ÖLNEBELERKENNUNGSVORRICHTUNG UND ÖLNEBELDETEKTIONSVERFAHREN
DISPOSITIF DE DÉTECTION DE BROUILLARD D'HUILE ET PROCÉDÉ DE DÉTECTION DE BROUILLARD D'HUILE

(30) Priority: 22.04.2015 JP 2015087592
(43) Date of publication of application: 26.10.2016
(73) Proprietor: HORIBA, Ltd., Minami-ku Kyoto-shi Kyoto 601-8510 (JP); Daihatsu Diesel Mfg. Co. Ltd., Osaka-shi, Osaka 531-0076 (JP)
(72) Inventor: NOMURA, Toshiyuki, Kyoto 601-8510 (JP); KUSAKA, Takeshi, Kyoto 601-8510 (JP); ABE, Noboru, Osaka 531-0076 (JP); MOCHIZUKI, Masaru, Osaka 531-0076 (JP)
(74) Representative: Müller Hoffmann & Partner

(56) References cited:
- EP-A1- 1 936 358
- GB-A- 2 398 382
- US-A- 5 200 607

## Description

### Technical Field

The present invention relates to an oil mist detecting device and oil mist detecting method that detect oil mist.

### Background Art

For example, lubricating oil used for an internal combustion engine may become oil mist if it is heated by overheating of a bearing, or the like, and as an oil mist detecting device adapted to detect such oil mist, for example, there is one described in Patent Literature 1.

The oil mist detecting device described in Patent Literature 1 is one that has a casing including: a sensor containing chamber adapted to contain a light emitting element, a light receiving element, first refractive means, and second refractive means; and an oil mist introduction chamber where oil mist is introduced and diffused, and detects the oil mist by, in the casing, irradiating the oil mist with light emitted from the light emitting element through the first refractive means, and receiving light reflected or scattered by the oil mist by the light receiving element through the second refractive means.

In addition, in order to prevent the oil mist from intruding into the sensor containing chamber, a translucent windows separates between the sensor containing chamber and the oil mist introduction chamber.

### Citation List

### Patent Literature

Patent Literature 1: Japanese Unexamined Patent Publication JP-A2006-234836

From GB 2 398 382 A, an oil mist sensing device is known which includes a light emitting means and a lens to direct position the light emitted from the light emitting means to oil mist. The same lens, i. e., another portion thereof, is used to direct light scattered by or reflected from the oil mist to a photo detector. The two lens portions are separated by a light shielding member.

US 5 200 607 A relates to a photoelectric sensor with a droplet resistant face of a window including a groove for preventing liquid droplets from adhering to the outer surface of the window.

EP 1 936 358 A1 relates as well to an oil mist detector and describes that a calibration is initially made, wherein under the absence of oil mist, a light emitting device emits light. The light receiving device receives a given amount of background scattering light. A dirt abnormal value is set such that it corresponds to, for example, 50 to 80% of the amount of the signal obtained under absence of oil mist.

### Summary of Invention

### Technical Problem

The device described in Patent Literature 1 has a problem that the translucent window reflects part of the light introduced into the oil mist introduction chamber or led out of the sensor containing chamber, and if the light receiving element erroneously receives the resulting reflected light, the detection accuracy of the oil mist deteriorates. Further, such undesired reflected light changes in intensity depending on the degree of soil of the translucent window exposed to the oil mist, and therefore correction is difficult.

The present application is made in consideration of the above-described problems, and a main object thereof is to provide an oil mist detecting device that can prevent the deterioration of detection accuracy due to undesired reflected light.

### Solution to Problem

The above problems are solved by the subject-matter of the independent claims.

The oil mist detecting device according to the present invention is one that includes a container having: a containing space containing a light emitting element and a light receiving element; and an introduction space into which oil mist is introduced, and detects the oil mist by in the container, irradiating the oil mist with light emitted from the light emitting element and receiving light reflected or scattered by the oil mist by the light receiving element. In addition, the oil mist detecting device includes a lens that separates between the containing space and the introduction space and is formed with a bottom-equipped groove opened on a containing space side. The lens includes: a first lens element that is arranged on the containing space side, and which is formed with the bottom-equipped groove, and a second lens element that is arranged on an introduction space side. Further, the first lens element has a first light guiding region adapted to guide the light emitted from the light emitting element to the introduction space as one part resulting from division by the bottom-equipped groove, as well as, as the other part resulting from the division by the bottom-equipped groove, having a second light guiding region adapted to guide the light reflected or scattered by the oil mist to the light receiving element.

In such a configuration, since the first light guiding region and the second light guiding region provided on the containing space side of the lens are integrally formed within the one lens to allow light introduction/leading out between the containing space and the introduction space, and also the introduction space side of the lens prevents the oil mist from intruding into the containing space, the need to arrange another member such as a translucent window can be eliminated. For this reason, the intensity of undesired reflected light can be reduced, making it possible to prevent the deterioration of detection accuracy. Also, since the number of parts can be reduced, the device can be simplified and downsized.

As one specific embodiment of the oil mist detecting device of the present invention, the oil mist detecting device in which the first lens element has a spherical shape; and the second lens element has a columnar shape can be cited.

Reducing the thickness of the second lens element to shorten a light path length inside the second lens element makes it possible to prevent the light from leaking from the first light guiding region to the second light guiding region through the second lens element. Also, even in the case where contaminants due to the oil mist are attached on the surface of the lens on the introduction space side, reducing the light path length inside the second lens element makes it possible to reduce a variation in the amount of light received by the light receiving element due to the contaminants to an ignorable level.

As one specific embodiment of the oil mist detecting device of the present invention, the oil mist detecting device in which the lens is made of polyethylene naphthalate can be cited.

Typical lens material is inferior in chemical resistance, and therefore in order to use a lens in an environment where oil mist is produced, it is necessary to cover the surface of the lens with a protection film or the like. However, a protection film has the problem of reflecting part of the light introduced into the introduction space or led to the containing space, or being peeled off under a high temperature environment where oil mist is produced. On the other hand, in the oil mist detecting device of the present invention, since the lens is made of polyethylene naphthalate superior in chemical resistance and heat resistance, the lens can be prevented from being deteriorated or damaged by oil mist even without covering the surface of the lens with a protection film or the like.

As one specific embodiment of the oil mist detecting device of the present invention, the oil mist detecting device further including a sealing member that is arranged between the container and the lens without any gap can be cited.

In such a configuration, the oil mist can be more surely prevented from intruding into the containing space of the container, and therefore the deterioration of the oil mist detecting device can be prevented.

An oil mist detecting method of the present invention is one that detects oil mist by in a container having: a containing space containing a light emitting element and a light receiving element; and an introduction space into which oil mist is introduced, irradiating the oil mist with light emitted from the light emitting element and receiving light reflected or scattered by the oil mist by the light receiving element. In addition, the oil mist detecting method includes: covering with a light shielding member an introduction space side of a lens, as defined in appended claim 1 and as described above, that separates between the containing space and the introduction space and is formed with a bottom-equipped groove opened on a containing space side, and then recording an initial received light amount of light received by the light receiving element, the light resulting from reflection or scattering of the light emitted from the light emitting element; again covering the introduction space side of the lens with the light shielding member, and then recoding a diagnostic received light amount of light received by the light receiving element, the light resulting from the reflection or the scattering of the light emitted from the light emitting element; and comparing the initial received light amount and the diagnostic received light amount to thereby determine deterioration of the oil mist detecting device.

In order to diagnose the deterioration of the light emitting element or the light receiving element, there is a method that compares the amount of light received by the receiving element at the time of the diagnosis with a preliminarily obtained initial received light amount with each other. However, when diagnosing deterioration, contaminants due to oil mist are attached on the lens, and unless the contaminants are removed, the effect of noise appears in the amount of light received, preventing accurate deterioration diagnosis.

On the other hand, in the oil mist detecting device of the present invention, since the introduction space side of the lens attached with contaminants is covered with the light shielding member, the effect of noise due to the contaminants can be prevented from appearing in the amount of light received, and also since it is not necessary to remove the contaminants, deterioration can be simply diagnosed.

### Advantageous Effects of Invention

According to the present invention, since it is not necessary to provide another member such as a translucent window or a protection film, the intensity of undesired reflected light can be reduced to prevent the deterioration of detection accuracy.

### Brief Description of Drawings

FIG. 1 is a perspective view of an oil mist detecting device in a first embodiment;
FIG. 2 is a side view of the oil mist detecting device in the first embodiment;
FIG. 3 is an A-A cross-sectional view of the oil mist detecting device in the first embodiment;
FIG. 4 is a perspective view of a lens in the first embodiment;
FIG. 5 is a schematic diagram illustrating light paths in the oil mist detecting device in the first embodiment;
FIG. 6 is an A-A cross-sectional view of an oil mist detecting device in a second embodiment;
FIG. 7 is a schematic diagram illustrating light paths in the oil mist detecting device in the second embodiment; and
FIG. 8 is a block diagram of the oil mist detecting device in the second embodiment.

### Description of Embodiments

One embodiment of the oil mist detecting device of the present invention will be described below using drawings.

### <First embodiment>

An oil mist detecting device 1 of a first embodiment is one that is attached to, for example, a large-sized diesel engine or the like, and detects oil mist produced by overheating of lubricating oil or the like used in an engine chamber. That is, the oil mist detecting device 1 is one used to sense whether or not oil mist is present and if present, measure the concentration of the oil mist.

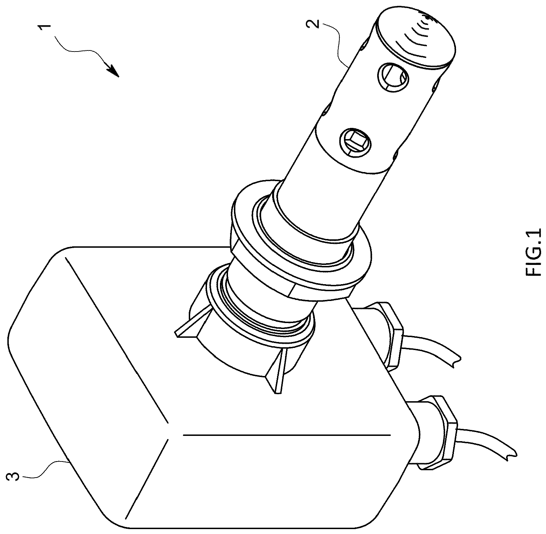

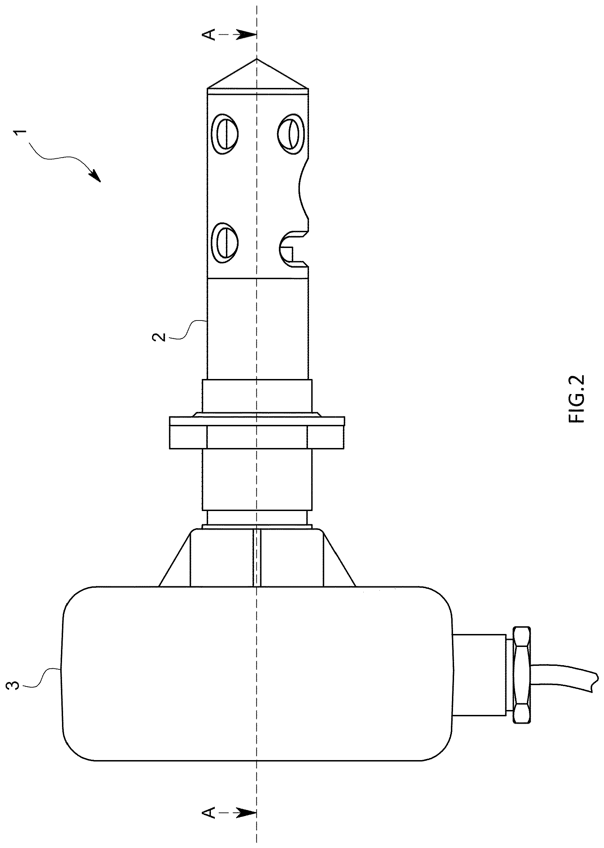

In addition, as illustrated in FIGS. 1 and 2, the oil mist detecting device 1 includes: a cylindrically-shaped sensor part 2 adapted to generate a detection signal; and an information processing part 3 that is provided continuously with the base end of the sensor part 2, has a rectangular parallelepiped shape, and processes the detection signal generated by the sensor part 2, and is used arranged so as to protrude the sensor part 2 almost horizontally toward the possible production position of oil mist.

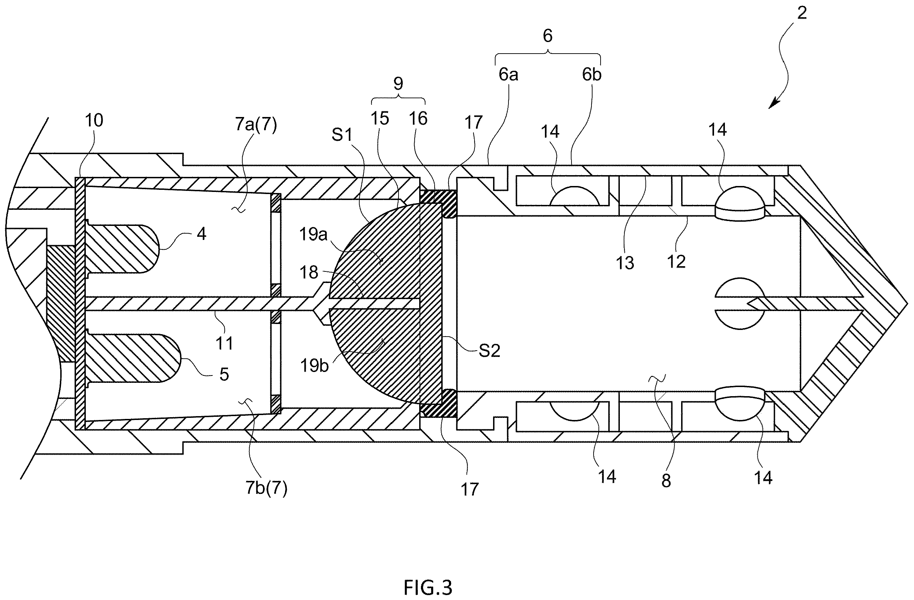

The sensor part 2 is one that irradiates oil mist with light emitted from a light emitting element 4, receives light reflected or scattered by the oil mist by a light receiving element 5, and generates the detection signal on the basis of the amount of the light received by the light receiving element 5. In addition, as illustrated in FIG. 3, the sensor part 2 has a container 6 including: a containing space 7 containing the light emitting element 4 and the light receiving element 5; and an introduction space 8 where oil mist is introduced and diffused.

The light emitting element 4 is, for example, an LED, and emits light in a wavelength band suitable for the sizes of particles in oil mist. Note that the light emitting element 4 is not limited to an LED, but may be another light emitting element such as an LD.

The light receiving element 5 is, for example, a PD (photodiode), and transmits the detection signal having a value corresponding to the intensity of light received by the light receiving surface thereof to the information processing part 3. Note that the light receiving element 5 is not limited to a PD, but may be another light emitting element such as a CCD.

The container 6 is configured to arrange one end thereof continuously with the information processing part 3, and include: a cylindrically-shaped first containing element 6a inside which the containing space 7 is formed; and a cylindrically-shaped second containing element 6b of which one end is blocked and inside which the introduction space 8 is formed. In addition, between the first containing element 6a and the second containing element 6b, a lens 9 is arranged to separate between the containing space 7 and the introduction space 8.

As illustrated in FIG. 3, the containing space 7 refers to a space partitioned by a supporting plate 10 arranged so as to block a one end opening of the first containing element 6a and the lens 9. On the supporting plate 10, the light emitting element 4 and the light receiving element 5 are attached so as to be symmetrical with respect to an axial direction. Also, between the light emitting element 4 and the light receiving element 5, a partition plate 11 that divides the containing space 7 into two parts and extends in the axial direction is provided, and one end of the partition plate 11 is supported by the supporting plate 10. For this reason, the containing space 7 is divided into a first space 7a through which the light emitted from the light emitting element 4 is guided to the lens 9 and a second space 7b through which the light entering through the lens 9 is guided to the light receiving element 5.

As illustrated in FIG. 3, the introduction space 8 refers to a space provided between the lens 9 and the blocked one end of the second containing element 6b. Note that the side circumferential surface of the second containing element 6b is configured to be a double wall structure including an inner wall 12 and an outer wall 13, and through-holes 14 are formed in each of the inner wall 12 and the outer wall 13. In addition, oil mist is introduced/led out through the through-holes 14.

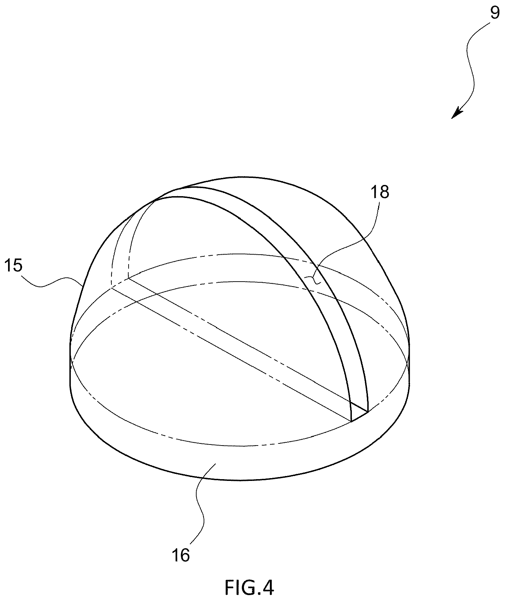

Further, as illustrated in FIGS. 3 and 4, the lens 9 includes: a first refractive surface S1 that is arranged on the containing space 7 side and formed as a convex surface; and a second refractive surface S2 that is arranged on the introduction space 8 side and formed as a flat and smooth surface. In addition, in the first refractive surface S1, a concave-shaped bottom-equipped groove 18 that vertically divides the below-described first lens element 15 is formed, and into the bottom-equipped groove 18, the other end of the partition plate 11 dividing the containing space 7 into two parts is fitted.

Still further, as illustrated in FIGS. 3 and 4, the lens 9 is configured to include: the first lens element 15 that has the first refractive surface S1 and is formed in a spherical shape; and a second lens element 16 that has the second refractive surface S2 and is formed in a columnar shape. As the constituent material of the lens, an optical resin material such as polyethylene naphthalate, polycarbonate, acrylic, or cycloolefin polymer, preferably polyethylene naphthalate can be used.

The first lens element 15 is one adapted to guide the light from the light emitting element 4 to the introduction space 8 as well as guiding the light reflected or scattered by oil mist present in the introduction space 8 to the light receiving element 5. Specifically, as one part resulting from the division by the bottom-equipped groove 18, the first lens element 15 has a first light guiding region 19a that is arranged in the first space 7a and adapted to guide the light emitted from the light emitting element 4 to the introduction space 8, and as the other one part resulting from the division by the bottom-equipped groove 18, has a second light guiding region 19b that is arranged in the second space 7b and adapted to guide the light reflected or scattered by the oil mist present in the introduction space 8 to the light receiving element 5.

The second lens element 16 also plays a role in preventing the oil mist from intruding into the containing space 7 from the introduction space 8. The second lens element 16 is configured to have a thickness thinner than the thickness of the first lens element 15. Note that the thickness of the second lens element 16 can be appropriately changed.

The lens 9 is arranged in the container 6 in the following manner.

As illustrated in FIG. 3, the lens 9 is fixed between the first containing element 6a and the second containing element 6b by while fixing the side circumferential end part of the lens 9, arranging the lens 9 and an annular-shaped sealing member 17 at the opening one end of the second containing element 6b in a state where the sealing member 17 is arranged between the lens 9 and the container 6 without any gap, and while pressing the lens 9 and the sealing member 17 against the one end of the second containing element 6b, attaching the first containing element 6a to the second containing element 6b so as to cover the outer circumferential surface of the second containing element 6b in the vicinity of the one end. When doing this, in the case where the sealing member 17 is formed of, for example, an elastically deformable packing or the like, the sealing member 17 fills the gap between the first containing element 6a and the lens 9 as well as filling the gap between the second containing element 6b and the lens 9 while deforming the shape thereof. For this reason, the sealing member 17 can prevent any gap from being formed between the first containing element 6a and the lens 9 or between the second containing element 6b and the lens 9.

The information processing part 3 is a so-called computer circuit structurally having some components such as a CPU, an internal memory, an I/O buffer circuit, and an A/D converter. Also, the information processing part 3 is one that operates in accordance with a program stored in a predetermined area of the internal memory, and thereby performs information processing. In the present embodiment, on the basis of the detection signal transmitted from the light receiving element, the information processing part 3 senses whether or not oil mist is present and if present, measures the concentration of the oil mist.

The oil mist detecting actions of the oil mist detecting apparatus 1 configured as above will be described.

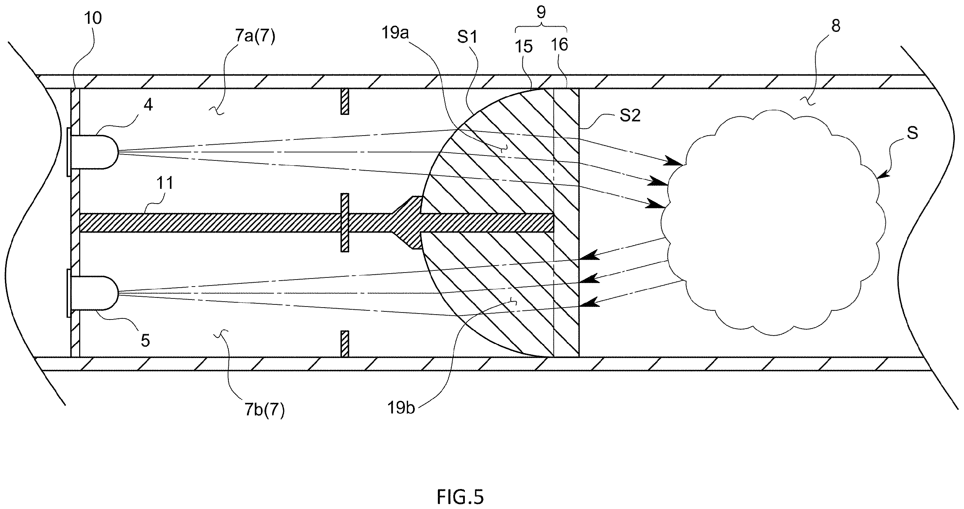

As illustrated in FIG. 5, the light emitted from the light emitting element 4 travels in a direction substantially parallel to the axial direction of the container 6 while slightly spreading in the first space 7a, then in the first light guiding region 19a of the first lens element 15, is made substantially parallel while tilting the light axis thereof, after passing through the second lens element 16, enters the introduction space 8, and irradiates a region S set near the focal point of the first light guiding region 19a.

Note that the second lens element 16 is molded integrally with the first lens element 15, and therefore the light tilted in the first light guiding region 19a passes through the second lens element 16 without changing the traveling direction thereof.

Then, among the light reflected or scattered by the oil mist present in the region S of the introduction space 8, light entering the second light guiding region 19b through the second lens element 16 is guided to the light receiving element 5 and received by the light receiving element 5 after being refracted in the second light guiding region 19b so as to make the light axis thereof parallel to the axial direction of the container 6.

The light receiving element 5 transmits the detection signal having a value corresponding to the intensity of the received light to the information processing part 3 through a preamplifier circuit and the like. The information processing part 3 performs the processing on the basis of the detection signal to determine whether or not oil mist is present and if present, measure the concentration of the oil mist, and displays a result of the determination/measurement on display means such as a lamp or a display. Note that the display means may be provided in the information processing part 3 or provided separately from the information processing part 3.

The oil mist detecting device 1 of the first embodiment configured as described above produces the following remarkable effects.

That is, since the first and second light guiding regions 19a and 19b of the lens 9 provided on the containing space side allow light introduction/leading out between the containing space 7 and the introduction space 8, and also the introduction space side of the lens 9 prevents the oil mist present in the introduction space 8 from intruding into the containing space 7, the need to arrange a translucent window can be eliminated, and the intensity of undesired reflected light can be reduced, making it possible to prevent the deterioration of detection accuracy . Also, as compared with the case of arranging a translucent window, the number of parts can be reduced, and therefore the oil mist detecting device 1 can be downsized and simplified.

Further, reducing the thickness of the second lens element 16 to shorten a light path length inside the second lens element 16 makes it possible to prevent the light from leaking from the first light guiding region 19a to the second light guiding region 19b through the second lens element 16. For this reason, even in the case where contaminants due to the oil mist are attached on the second refractive surface S2, a variation in the amount of light received by the light receiving element 5 due to the contaminants can be reduced to an ignorable level.

Still further, since the lens 9 is made of polyethylene naphthalate superior in chemical resistance and heat resistance, the lens 9 can be prevented from being damaged or deteriorated by oil mist, and also the use reliability of the oil mist detecting device 1 under a high temperature environment can be increased.

In addition, since in the gap between the container 6 and the lens 9, the sealing member 17 is arranged, the oil mist can be more surely prevented from intruding into the containing space 7 of the container 6, and therefore the oil mist detecting device 1 can be prevented from deteriorating.

### <Second embodiment>

Next, an oil mist detecting device 20 of a second embodiment will be described.

The oil mist detecting device 20 of the second embodiment is, in addition to the oil mist detecting device 1 of the first embodiment, configured such that the information processing part 3 has a deterioration diagnostic function for the light emitting element 4 or the light receiving element 5. The rest of the second embodiment is the same as that of the first embodiment, and therefore the description thereof will be omitted here. Note that in the following, the case of diagnosing the light emitting element 4 will be described.

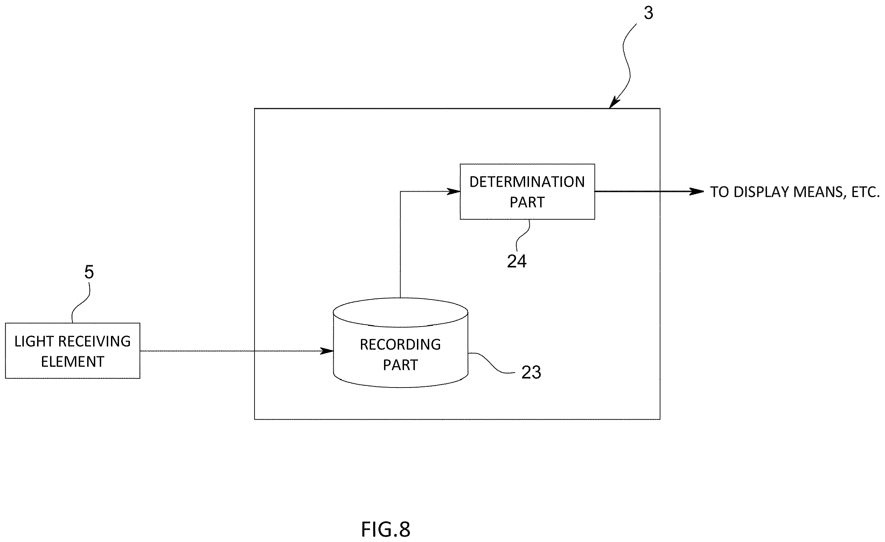

As illustrated in FIG. 8, the information processing part 3 in the second embodiment is one including: a recording part 23 adapted to receive and record a detection signal transmitted from the light receiving element 5; and a determination part 24 adapted to obtain predetermined information from the recording part 23 to determine the deterioration of the oil mist detecting device. Note that the recording part 23 may be one adapted to record, for example, a date and time signal indicating a date and time at which the recording part 23 obtained the detection signal with the data and time signal related to the detection signal.

In the oil mist detecting device 20 of the second embodiment, the deterioration of the oil mist detecting device is diagnosed in the following manner.

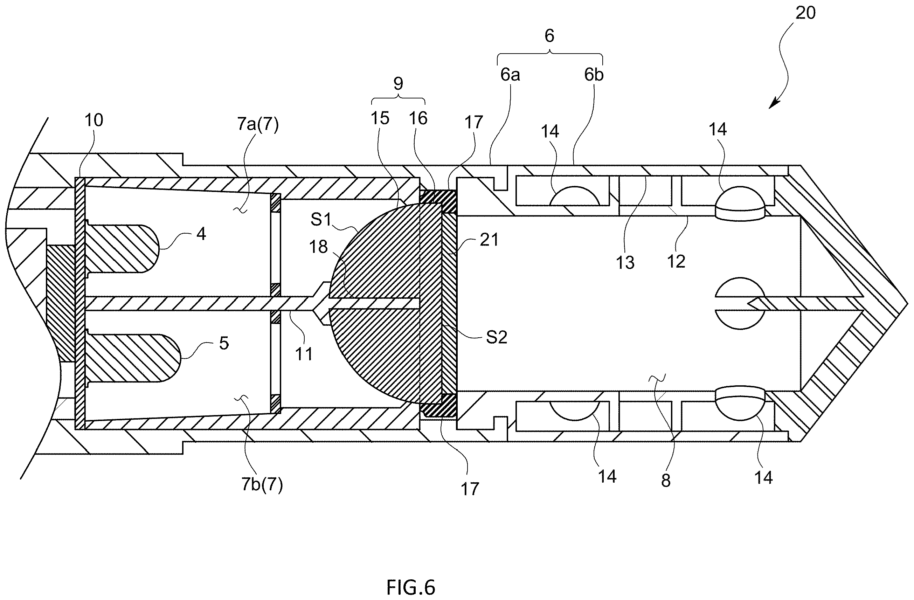

First, as illustrated in FIG. 6, a user set a light shielding member 21 so as to cover the introduction space 8 side of the lens 9 in a state where the oil mist detecting device 20 is unused.

Note that the light shielding member 21 is a circular-shaped member having a side surface having almost the same diameter as the inside diameter of the sealing member 17, and contained in the container 6 by being pressed and fixed held between the lens 9 and the sealing member 17. The light shielding member 21 may be one that completely shields light or one that has reflectance making it possible to ignore the effect of contamination. As such a light shielding member, a member made of a material superior in chemical resistance can be used, such as a black nylon-based resin plate or a fluorine-based rubber plate.

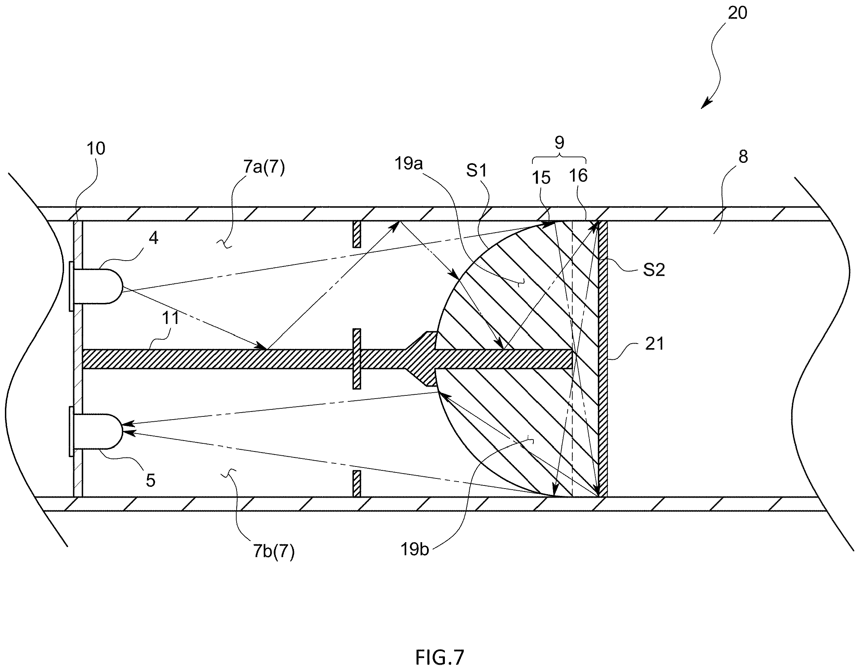

When activating the oil mist detecting device 20 in this state, among light emitted from the light emitting element 4, as illustrated in FIG. 7, light reflected or scattered by the side circumferential surface of the container 6 and inside the lens 9 reaches the light receiving element 5. The light receiving element 5 generates the detection signal having a value corresponding to the amount of the received light and transmits the detection signal to the information processing part 3. The detection signal is generated by so-called stray light, and a corresponding signal amount is tiny. This signal amount is desirably adjusted by the thickness of the second lens element 16 so as to be less than 1 % of a signal amount used for normal detection of oil mist. By making the adjustment in this manner, at the time of the normal detection of oil mist concentration, the adverse effect of the signal generated by the stray light can be prevented.

In the information processing part 3, as illustrated in FIG. 8, the recording part 23 receives and records the detection signal transmitted from the light receiving element 5. The detection signal recorded by the recording part 23 is hereinafter referred to as an initial received light amount. When the initial received light amount is recorded, the user removes the light shielding member 21 from the lens 9.

After that, when suspecting the deterioration of the light emitting element 4 of the oil mist detecting device 20, or when desiring to regularly diagnose the deterioration of the light emitting element 4, a user sets the light shielding member 21 so as to cover the introduction space 8 side of the lens 9.

Then, when activating the oil mist detecting device 20 in this state, among the light emitted from the light emitting element 4, as illustrated in FIG. 7, the light reflected or scattered by the side circumferential surface of the container 6 reaches the light receiving element 5. The light receiving element 5 generates the detection signal having a value corresponding to the amount of the received light and transmits the detection signal to the information processing part 3.

In the information processing part 3, as illustrated in FIG. 8, the recording part 23 receives and records the detection signal transmitted from the light receiving part 5. The detection signal recorded by the recording part 23 is hereinafter referred to as a diagnostic received light amount. Then, the determination part 24 extracts the initial received light amount and the diagnostic received light amount from the recording part 23, and if the diagnostic received light amount is equal to or less than a predetermined ratio of the initial received light amount, determines that the light emitting element 4 has deteriorated and displays a result of the determination on display means or the like.

The oil mist detecting device 20 of the second embodiment configured as described above produces the following remarkable effects.

That is, since the introduction space 8 side of the lens attached with contaminants is covered with the light shielding member 21, the effect of noise due to the contaminants can be prevented from appearing in a received light amount, and also since it is not necessary to remove the contaminants, deterioration can be simply diagnosed.

The present invention is not limited to any of the above-described embodiments, and can be modified within the scope of the appended claims.

In each of the above-described embodiment, the first lens element has a spherical shape, but may have, for example, a rectangular parallelepiped shape, and as long as the first lens element includes the first light guiding region and the second light guiding region, the shape thereof can be appropriately and freely changed. Also, in each of the above-described embodiments, the bottom-equipped groove 18 has a depth reaching the boundary between the first lens element 15 and the second lens element 16. However, the depth of the bottom-equipped groove may be appropriately changed. For example, the bottom-equipped groove 18 may have a depth reaching the middle of the first lens element 15 or have a depth exceeding the boundary between the first lens element 15 and the second lens element 16 and reaching the middle of the second lens element 16.

Also, the constituent material of the lens is not limited to the material described in any of the above-described embodiments, but may be any material as long as the material is superior in resistances such as chemical resistance, heat resistance, and oil resistance.

Further, in the above-described second embodiment, a user obtains the initial received light amount. However, the initial received light amount may be, for example, one recorded in the recording part in advance at the time of shipment. Also, the present invention may be configured such that the information processing part does not have the determination part, and a user compares the initial received light amount and the diagnostic received light amount recorded by the recording part to diagnose the deterioration of the oil mist detecting device.

In addition, the above-described second embodiment may be configured such that, for example, the light shielding member is formed like a shutter that automatically opens/closes, user's pressing of a separately provided switch allows the information processing part to receive a request signal, and on the basis of an open/close signal transmitted from the information processing part, the light shielding member opens/closes. Further, it is also possible to provide an open/close door on the introduction space side, and attach/detach the light shielding member through the door.

Also, it may be adapted to make the lens of a material such as COP, PC, or PMMA, and stick a protection film formed of, for example, a thin film on the lens so as to cover the induction space side of the lens. By forming the protection film thin, the intensity of the resulting reflected light can be reduced, and therefore by making the lens of a general material as described above and sticking the protection film on the introduction space side of the lens, cost can be reduced.

Besides, the present invention can be variously modified without departing from the scope thereof, as defined by the appended claims.

### Reference Signs List

- 1:: Oil mist detecting device
- 4:: Light emitting element
- 5:: Light receiving element
- 7:: Containing space
- 8:: Introduction space
- 9:: Lens
- 18:: Bottom-equipped groove
- 19a:: First light guiding region
- 19b:: Second light guiding region

## Claims

1. An oil mist detecting device (1) that comprises a container (6) having: a containing space (7) containing a light emitting element (4) and a light receiving element (5); and an introduction space (8) into which oil mist is introduced, and detects the oil mist in the container (6), by irradiating the oil mist with light emitted from the light emitting element (4) and receiving light reflected or scattered by the oil mist by the light receiving element (5), the oil mist detecting device (1) comprising
a lens (9) that separates between the containing space (7) and the introduction space (8) and is formed with a bottom-equipped groove (18) opened on a containing space side, wherein the lens (9) includes: a first lens element (15) that is arranged on the containing space side, and which is formed with the bottom-equipped groove (18); and a second lens element (16) that is arranged on an introduction space side, and
the first lens element (15) comprises a first light guiding region (19a) adapted to guide the light emitted from the light emitting element (4) to the introduction space (8) as one part resulting from division by the bottom-equipped groove (18), as well as, as the other part resulting from the division by the bottom-equipped groove (18), comprising a second light guiding region (19b) adapted to guide the light reflected or scattered by the oil mist to the light receiving element (5).

2. The oil mist detecting device (1) according to claim 1, wherein
the first lens element (15) has a spherical shape; and the second lens element (16) has a columnar shape.

3. The oil mist detecting device (1) according to claim 1, wherein
the lens (9) is made of polyethylene naphthalate.

4. The oil mist detecting device (1) according to claim 1, further comprising a sealing member (17) that is arranged between the container (6) and the lens (9) without any gap.

5. An oil mist detecting method that detects oil mist in a container (6) having: a containing space (7) containing a light emitting element (4) and a light receiving element (5); and an introduction space (8) into which the oil mist is introduced, irradiating the oil mist with light emitted from the light emitting element (4) and receiving light reflected or scattered by the oil mist by the light receiving element (5), the oil mist detecting method comprising:
covering with a light shielding member (21) an introduction space side of a lens (9) as defined in claim 1, that separates between the containing space (7) and the introduction space (8) and is formed with a bottom-equipped groove (18) opened on the containing space side, and then recording an initial received light amount of light received by the light receiving element (5), the light resulting from reflection or scattering of the light emitted from the light emitting element (4);
again covering the introduction space side of the lens (9) with the light shielding member (21), and then recording a diagnostic received light amount of the light received by the light receiving element (5), the light resulting from the reflection or the scattering of the light emitted from the light emitting element (4); and
comparing the initial received light amount and the diagnostic received light amount to thereby determine deterioration of the oil mist detecting device (1).

## Patentansprüche

1. Ölnebel detektierende Vorrichtung (1), die einen Behälter (6) aufweist, welcher umfasst: einen Aufnahmeraum (7), der ein lichtemittierendes Element (4) und ein lichtempfangendes Element (5) enthält; und einen Einführungsraum (8), in den Ölnebel eingeführt wird, und den Ölnebel im Behälter (6) detektiert, indem der Ölnebel mit von dem lichtemittierenden Element (4) emittiertem Licht bestrahlt wird und durch den Ölnebel reflektiertes oder gestreutes Licht von dem lichtempfangenden Element (5) empfangen wird, wobei die Ölnebel detektierende Vorrichtung (1) umfasst:
eine Linse (9), die zwischen dem Aufnahmeraum (7) und dem Einführungsraum (8) trennt und mit einer mit einem Boden versehenen Rille (18) ausgebildet ist, die auf einer Seite des Aufnahmeraums geöffnet ist, wobei
die Linse (9) umfasst: ein erstes Linsenelement (15), das auf der Seite des Aufnahmeraums angeordnet ist und das mit der mit einem Boden versehenen Rille (18) ausgebildet ist; und ein zweites Linsenelement (16), das auf einer Seite des Einführungsraums angeordnet ist, und
das erste Linsenelement (15) einen lichtlenkenden Bereich (19a) umfasst, der dafür geeignet ist, das von dem lichtemittierenden Element (4) emittierte Licht zum Einführungsraum (8) zu lenken, als ein Teil, der sich aus einer Teilung durch die mit einem Boden versehene Rille (18) ergibt, sowie als den anderen Teil, der sich aus der Teilung durch die mit einem Boden versehene Rille (18) ergibt, einen zweiten lichtlenkenden Bereich (19b) umfasst, der dafür geeignet ist, das durch den Ölnebel reflektierte oder gestreute Licht zum lichtempfangenden Element (5) zu lenken.

2. Ölnebel detektierende Vorrichtung (1) nach Anspruch 1, wobei
das erste Linsenelement (15) eine sphärische Form hat; und das zweite Linsenelement (16) eine säulenartige Form hat.

3. Ölnebel detektierende Vorrichtung (1) nach Anspruch 1, wobei
die Linse (9) aus Polethylennaphthalat hergestellt ist.

4. Ölnebel detektierende Vorrichtung (1) nach Anspruch 1, ferner umfassend
ein Dichtungselement (17), das zwischen dem Behälter (6) und der Linse (9) ohne jeglichen Spalt angeordnet ist.

5. Ölnebeldetektionsverfahren, das einen Ölnebel in einem Behälter (6) detektiert, welcher umfasst: einen Aufnahmeraum (7), der ein lichtemittierendes Element (4) und ein lichtempfangendes Element (5) enthält; und einen Einführungsraum (8), in den der Ölnebel eingeführt wird, wobei der Ölnebel mit von dem lichtemittierenden Element (4) emittiertem Licht bestrahlt wird und Licht, das durch den Ölnebel reflektiert oder gestreut wurde, von dem lichtempfangenden Element (5) empfangen wird, wobei das Ölnebeldetektionsverfahren umfasst:
Abdecken, mit einem lichtabschirmenden Element (21), einer Seite des Einführungsraums einer Linse (9) nach Anspruch 1, die zwischen dem Aufnahmeraum (7) und dem Einführungsraum (8) trennt und mit einer mit einem Boden versehenen Rille (18) ausgebildet ist, die auf der Seite des Aufnahmeraums geöffnet ist, und dann Aufzeichnen einer anfänglichen empfangenen Lichtmenge eines von dem lichtempfangenden Element (5) empfangenen Lichts, wobei das Licht aus einer Reflexion oder Streuung des vom lichtemittierenden Element (4) emittierten Lichts resultiert;
wieder Abdecken der Seite des Einführungsraums der Linse (9) mit dem lichtabschirmenden Element (21) und dann Aufzeichnen einer diagnostischen empfangenen Lichtmenge des von dem lichtempfangenden Element (5) empfangenen Lichts, wobei das Licht aus der Reflexion oder der Streuung des vom lichtemittierenden Element (4) emittierten Lichts resultiert; und
Vergleichen der anfänglichen empfangenen Lichtmenge und der diagnostischen empfangenen Lichtmenge, um dadurch eine Verschlechterung der Ölnebel detektierenden Vorrichtung (1) zu bestimmen.

## Revendications

1. Dispositif de détection de brouillard d'huile (1) qui comprend un récipient (6) comportant : un espace formant contenant (7) qui contient un élément émetteur de lumière (4) et un élément récepteur de lumière (5) ; et un espace d'introduction (8) dans lequel le brouillard d'huile est introduit, et qui détecte le brouillard d'huile dans le récipient (6) grâce à l'exposition du brouillard d'huile à une lumière émise à partir de l'élément émetteur de lumière (4) et à la réception, à l'aide de l'élément récepteur de lumière (5), de la lumière de réception réfléchie ou diffusée par le brouillard d'huile, le dispositif de détection de brouillard d'huile (1) comprenant :
une lentille (9) qui crée une séparation entre l'espace formant contenant (7) et l'espace d'introduction (8) et qui est pourvue d'une rainure de fond (18) ouverte sur un côté d'espace formant contenant,
la lentille (9) contenant : un premier élément de lentille (15) qui est disposé sur le côté d'espace formant contenant, et qui est pourvu de la rainure de fond (18) ; et un second élément de lentille (16) qui est disposé sur un côté d'espace d'introduction, et le premier élément de lentille (15) comprenant une première zone de guidage de lumière (19a) apte à guider la lumière émise à partir de l'élément émetteur de lumière (4) jusqu'à l'espace d'introduction (8) sous la forme d'une partie qui résulte de la division par la rainure de fond (18) et de l'autre partie qui résulte de la division par ladite rainure de fond (18), et comprenant une seconde zone de guidage de lumière (19b) apte à guider la lumière réfléchie ou diffusée par le brouillard d'huile jusqu'à l'élément récepteur de lumière (5).

2. Dispositif de détection de brouillard d'huile (1) selon la revendication 1, dans lequel le premier élément de lentille (15) a une forme sphérique ; et le second élément de lentille (16) a la forme d'une colonne.

3. Dispositif de détection de brouillard d'huile (1) selon la revendication 1, dans lequel la lentille (9) se compose de poly(naphtalate d'éthylène).

4. Dispositif de détection de brouillard d'huile (1) selon la revendication 1, comprenant également un élément d'étanchéité (17) qui est disposé entre le récipient (6) et la lentille (9) sans aucun espace.

5. Procédé de détection de brouillard d'huile qui détecte un brouillard d'huile dans un récipient (6) comportant : un espace formant contenant (7) qui contient un élément émetteur de lumière (4) et un élément récepteur de lumière (5) ; et un espace d'introduction (8) dans lequel le brouillard d'huile est introduit, et qui expose le brouillard d'huile à une lumière émise à partir de l'élément émetteur de lumière (4) et qui reçoit à l'aide de l'élément récepteur de lumière (5) la lumière de réception réfléchie ou diffusée par le brouillard d'huile, le procédé de détection de brouillard d'huile comprenant les mesures qui consistent :
à couvrir d'un élément pare-lumière (21) un côté d'espace d'introduction d'une lentille (9) telle qu'elle est définie dans la revendication 1 qui crée une séparation entre l'espace formant contenant (7) et l'espace d'introduction (8) et qui est pourvue d'une rainure de fond (18) ouverte sur le côté d'espace formant contenant, et à enregistrer ensuite une quantité de lumière reçue initiale de lumière reçue par l'élément récepteur de lumière (5), la lumière résultant de la réflexion ou de la diffusion de la lumière émise à partir de l'élément émetteur de lumière (4) ;
à couvrir à nouveau le côté d'espace d'introduction de la lentille (9) avec l'élément pare-lumière (21), et à enregistrer ensuite une quantité de lumière reçue de diagnostic de la lumière reçue par l'élément récepteur de lumière (5), la lumière résultant de la réflexion ou de la diffusion de la lumière émise à partir de l'élément émetteur de lumière (4) ; et
à comparer la quantité de lumière reçue initiale et la quantité de lumière reçue de diagnostic, pour déterminer ainsi la détérioration du dispositif de détection de brouillard d'huile (1).
